# EUROPEAN PATENT APPLICATION

(11) **EP 4 040 387 A1**
(43) Date of publication of application: **10.08.2022**
(21) Application number: 19947502.1
(22) Date of filing: 03.10.2019
(51) Int. Cl.: G06T 7/20, G06T 7/00

(54) **EXERCISE RECOGNITION METHOD, EXERCISE RECOGNITION PROGRAM, AND INFORMATION PROCESSING DEVICE**

(71) Applicant: FUJITSU LIMITED, Kawasaki-shi, Kanagawa 211-8588 (JP)
(72) Inventor: FUJISAKI, Masataka, Kawasaki-shi, Kanagawa 211-8588 (JP); SATO, Takuya, Kawasaki-shi, Kanagawa 211-8588 (JP); YABUKI, Akihiko, Kawasaki-shi, Kanagawa 211-8588 (JP); MASUI, Shoichi, Kawasaki-shi, Kanagawa 211-8588 (JP); HONDA, Takashi, Kawasaki-shi, Kanagawa 211-8588 (JP)
(74) Representative: Hoffmann Eitle
(86) International application number: PCT/JP2019/039201
(87) International publication number: WO 2021/064963

(57) **Abstract**

A recognition device acquires skeleton information based on positional information of each of a plurality of joints that includes a specific joint of a subject who makes a motion, in time series. Then, the recognition device estimates a region where the specific joint is positioned among a plurality of regions obtained by dividing a region of an object used for a motion using the positional information of the plurality of joints included in each piece of the time-series skeleton information. Thereafter, the recognition device recognizes the motion of the subject using the time-series skeleton information and the estimated position of the specific joint and outputs a recognition result.

## Description

### FIELD

The present invention relates to a motion recognition method, a motion recognition program, and an information processing device.

### BACKGROUND

In a wide range of fields including gymnastics, medical care, or the like, a person's movement is automatically recognized using skeleton information of the person such as an athlete or a patient. For example, in the gymnastics competition, a current scoring method is a method visually performed by a plurality of referees. However, motions have been complicated and a difficulty of a technique has been increased according to advance of instruments and improvements in training methods, and a case appears where it is difficult for the referee to recognize techniques. As a result, there are concerns for keeping fairness and accuracy of scoring such as a difference in a scoring result of an athlete for each referee.

Therefore, in recent years, an automatic scoring technique using three-dimensional skeleton coordinates (hereinafter, may be referred to as "skeleton information") of the athlete is used. For example, three-dimensional point group data of the athlete is acquired using a three-dimensional (3D) laser sensor, and the skeleton information of the athlete is calculated using the three-dimensional point group data. Then, by automatically recognizing the performed "technique" from time-series information of the skeleton information and providing an automatic scoring result to the referee, the fairness and the accuracy of scoring are guaranteed.

When such automatic recognition of the technique will be described using the pommel horse in the gymnastics competition as an example, an area around where the pommel that is one instrument of the pommel horse is placed is classified for each region. For example, a left side of a pommel 1 is classified as a region 1, an upper side of the pommel 1 is classified into a region 2, a region between the pommel 1 and a pommel 2 is classified as a region 3, an upper side of the pommel 2 is classified as a region 4, and a right side of the pommel 2 is classified as a region 5.

Then, a skeleton of a performer is recognized from the skeleton information, and wrist support positions are estimated depending on a region where left and right wrist positions obtained from the skeleton recognition result are positioned. Then, recognition of the technique, accuracy of the technique, or the like are evaluated according to the rules of the technique using the skeleton recognition result in time series generated from the time-series skeleton information and the estimated wrist support positions, and scoring is automatically performed.

### CITATION LIST

### PATENT DOCUMENT

Patent Document 1: International Publication Pamphlet No. WO 2018/070414

### SUMMARY

### [TECHNICAL PROBLEM]

However, according to the technique described above, accuracy of skeleton recognition processing using a sensing result is deteriorated due to a case where sensing of the 3D laser sensor includes noise, a difference caused when a plurality of sensing results are integrated, or the like, and it is difficult to guarantee estimation accuracy of a position of each joint.

On the other hand, when a motion is recognized, it may be required to accurately recognize a positional relationship between an object existing in the real world and a portion of a subject. For example, there is a case where a final motion recognition result changed depending on whether a wrist of a performer exists in a region A of the pommel horse or the wrist of the performer exists in a region B of the pommel horse. That is, even if the motion is the same, there is a case where, when the hand supports the region A, a technique T is recognized, and when the hand supports the region B, a technique S is recognized.

In the technique described above, a position of a portion obtained from the skeleton recognition result is used as it is to classify a region on the object where the portion is positioned. However, in a case where the skeleton recognition result includes an error, there is case where the allocated region is not correct. For example, there is a case where, in the pommel horse, although the wrists have been allocated to the region 1 in the skeleton recognition result, the hands have been originally placed on the region 2. When such a situation occurs, as a result, the motion recognition result may be erroneous, for example, the technique S is recognized as the technique T.

Therefore, in one aspect, an object of the present invention is to provide a motion recognition method, a motion recognition program, and an information processing device that improve recognition accuracy of a motion using a positional relationship by improving estimation accuracy with respect to the positional relationship between a specific portion of a subject and a plurality of regions on an object existing in the real world.

### [SOLUTION TO PROBLEM]

According to a first proposal, in a motion recognition method, a computer executes processing for acquiring skeleton information based on positional information of each of a plurality of joints including a specific joint of a subject who makes a motion, in time series. In the motion recognition method, the computer executes processing for estimating a region where the specific joint is positioned among a plurality of regions obtained by dividing a region of an object used for the motion using the positional information of the plurality of joints included in each piece of the time-series skeleton information. In the motion recognition method, the computer executes processing for recognizing a motion of the subject using the time-series skeleton information and the estimated position of the specific joint and outputting a recognition result.

### [ADVANTAGEOUS EFFECTS OF INVENTION]

In one aspect, motion recognition accuracy using a positional relationship between a specific portion of a subject and a plurality of regions of an object that exists in the real world can be improved.

### BRIEF DESCRIPTION OF DRAWINGS

FIG. 1 is a diagram illustrating an exemplary overall configuration of a system according to a first embodiment.
FIG. 2 is a functional block diagram illustrating a functional configuration of a learning device according to the first embodiment.
FIG. 3 is a diagram for explaining a distance image.
FIG. 4 is a diagram for explaining a skeleton definition.
FIG. 5 is a diagram for explaining skeleton data.
FIG. 6 is a diagram for explaining skeleton information related to a pommel horse.
FIG. 7 is a diagram for explaining class classification.
FIG. 8 is a diagram for explaining a difference in a joint movement depending on a support position at the time of lateral turning.
FIG. 9 is a diagram for explaining a difference in a joint movement depending on a support position at the time when Russian is performed.
FIG. 10 is a diagram for explaining a change in a z value of an ankle depending on the support position.
FIG. 11 is a diagram for explaining generation of learning data.
FIG. 12 is a diagram for explaining shaping of learning data.
FIG. 13 is a diagram for explaining learning of a class classification model.
FIG. 14 is a diagram for explaining an example of a feature amount to be learned.
FIG. 15 is a functional block diagram illustrating a functional configuration of a recognition device according to the first embodiment.
FIG. 16 is a diagram for explaining class classification processing.
FIG. 17 is a diagram for explaining class classification results in time series.
FIG. 18 is a functional block diagram illustrating a functional configuration of a scoring device according to the first embodiment.
FIG. 19 is a flowchart illustrating a flow of learning processing.
FIG. 20 is a flowchart illustrating a flow of automatic scoring processing.
FIG. 21 is a flowchart illustrating a flow of the class classification processing.
FIG. 22 is a diagram for explaining a hardware configuration example.

### DESCRIPTION OF EMBODIMENTS

Hereinafter, embodiments of a motion recognition method, a motion recognition program, and an information processing device according to the present invention will be described in detail with reference to the drawings. Note that the embodiments are not limited to the present invention. Furthermore, each of the embodiments may be appropriately combined within a range without inconsistency.

### [First Embodiment]

### [Overall Configuration]

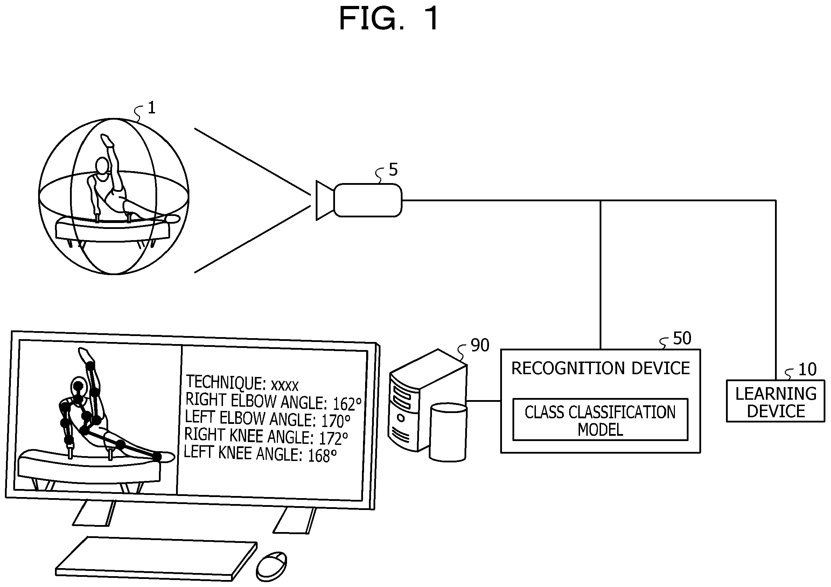

FIG. 1 is a diagram illustrating an exemplary overall configuration of a system according to a first embodiment. As illustrated in FIG. 1, the system is a system that includes a three-dimensional (3D) laser sensor 5, a learning device 10, a recognition device 50, and a scoring device 90, captures three-dimensional data of a performer 1 who is a subject, and recognizes a skeleton or the like to accurately score techniques. Note that, in the present embodiment, an example of recognizing skeleton information of a performer in a gymnastics competition will be described as an example.

Generally, the current scoring method in the gymnastics competition is a method visually performed by a plurality of scorers. However, with sophistication of techniques, there are increasing cases where it is difficult for the scorers to visually perform scoring. In recent years, an automatic scoring system and a scoring support system for scoring competitions using a 3D laser sensor have been known. For example, in these systems, the 3D laser sensor acquires a distance image, which is three-dimensional data of an athlete, and recognizes a skeleton, which includes, for example, the orientation of each joint and the angle of each joint of the athlete, from the distance image. Then, in the scoring support system, a result of skeleton recognition is displayed by a 3D model, such that the scorers are supported to carry out more precise scoring by, for example, checking a detailed situation of the performer. Furthermore, in the automatic scoring system, a performed technique or the like is recognized from the result of skeleton recognition, and scoring is performed according to a scoring rule.

Here, due to a case where noise is included in sensing of the 3D laser sensor or the like, accuracy of skeleton recognition processing using the sensing result is deteriorated, and there is a case where it is difficult to guarantee joint position estimation accuracy. However, because the deterioration in the joint position estimation accuracy in the automatic scoring system deteriorates reliability of the system, efforts to reduce an effect of the noise and suppress the deterioration in the estimation accuracy are important.

Therefore, in the automatic scoring system according to the first embodiment, the learning device 10 learns a class classification model and the recognition device 50 estimates a joint position of the performer 1 and recognizes a technique using the learned class classification model so as to improve the joint position estimation accuracy and the technique recognition accuracy in the gymnastics competition. As a result, accurate automatic scoring using the accurate recognition result by the scoring device 90 is achieved.

In other words, by introducing the artificial intelligence (AI) technology to the estimation of the joint position of the performer 1, the effect of the noise is reduced, and estimation accuracy for a positional relationship between the joint position of the performer 1 and each region on the pommel horse that exists in the real world is improved.

Here, the class classification model is a neural network that is learned by classifying positions on the pommel horse into a plurality of classes and uses a plurality of pieces of skeleton information acquired in time series as explanatory variables and a class where a specific joint of the performer is positioned as an objective variable. That is, by learning the time series change in the skeleton information of the performer as a feature, the class classification model does not directly specify the position of the specific joint of the performer from the skeleton recognition result and estimates the position of the specific joint from the joint positions of the entire body of the performer 1.

By using such a class classification model, even in a case where it is suspected that noise is mixed into the sensing of the 3D laser sensor, the recognition device 50 can accurately estimate the joint position and improve recognition accuracy of the technique in the performance of the performer 1. As a result, the deterioration in the reliability of the automatic scoring system can be suppressed.

### [Functional Configuration]

Next, a functional configuration of each device included in the system illustrated in FIG. 1 will be described. Note that, here, each of the learning device 10, the recognition device 50, and the scoring device 90 will be described.

### (Configuration of Learning Device 10)

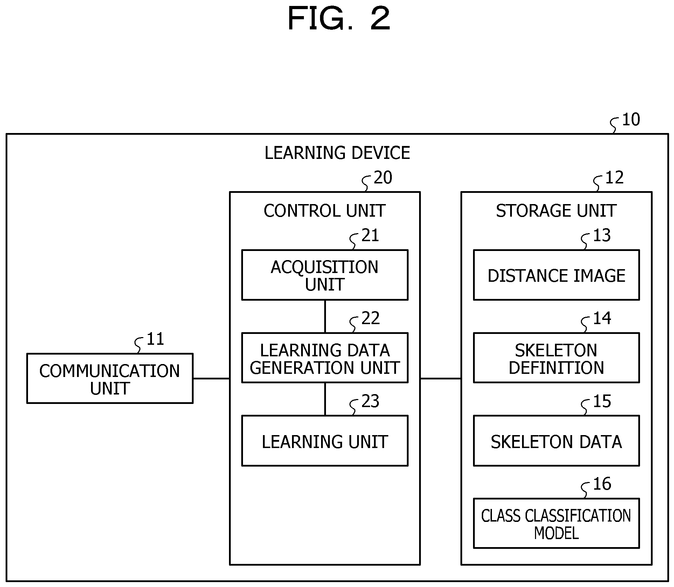

FIG. 2 is a functional block diagram illustrating a functional configuration of the learning device 10 according to the first embodiment. As illustrated in FIG. 2, the learning device 10 includes a communication unit 11, a storage unit 12, and a control unit 20.

The communication unit 11 is a processing unit that controls communication with another device, and is, for example, a communication interface or the like. For example, the communication unit 11 receives a distance image of the performer 1 captured by the 3D laser sensor 5, receives various types of data and instructions from an administrator's terminal or the like, and transmits the learned class classification model to the recognition device 50.

The storage unit 12 is a storage device that stores data, programs to be executed by the control unit 20, or the like, which is, for example, a memory, a processor, or the like. The storage unit 12 stores a distance image 13, a skeleton definition 14, skeleton data 15, and a class classification model 16.

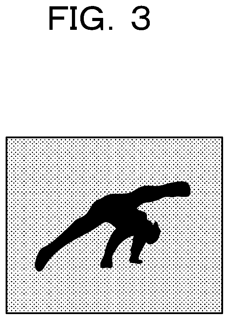

The distance image 13 is a distance image of the performer 1 captured by the 3D laser sensor 5. FIG. 3 is a diagram for explaining the distance image 13. As illustrated in FIG. 3, the distance image 13 is data including a distance from the 3D laser sensor 5 to a pixel, and the closer the distance from the 3D laser sensor 5 is, the darker the color is displayed. Note that the distance image 13 is captured at any time during the performance of the performer 1.

The skeleton definition 14 is definition information used to specify each joint of a skeleton model. The definition information stored here may also be measured for each performer by 3D sensing with the 3D laser sensor or may also be defined using a skeleton model of a general system.

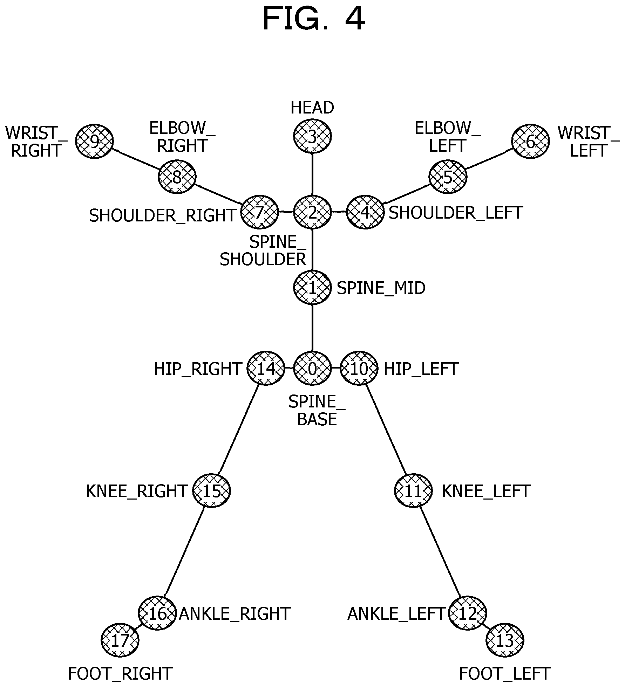

FIG. 4 is a diagram for explaining the skeleton definition 14. As illustrated in FIG. 4, the skeleton definition 14 stores 18 pieces of (numbers 0 to 17) definition information in which each of joints specified by a known skeleton model is numbered. For example, as illustrated in FIG. 4, a right shoulder joint (SHOULDER_RIGHT) is assigned with number 7, a left elbow joint (ELBOW_LEFT) is assigned with number 5, a left knee joint (KNEE_LEFT) is assigned with number 11, and a right hip joint (HIP_RIGHT) is assigned with number 14. Here, in the embodiment, for the right shoulder joint with number 7, an X coordinate is described as X7, a Y coordinate is described as Y7, and a Z coordinate is described as Z7 in some cases. Note that, for example, a Z axis can be defined as a distance direction from the 3D laser sensor 5 toward a target, a Y axis can be defined as a height direction perpendicular to the Z axis, and an X axis can be defined as a horizontal direction.

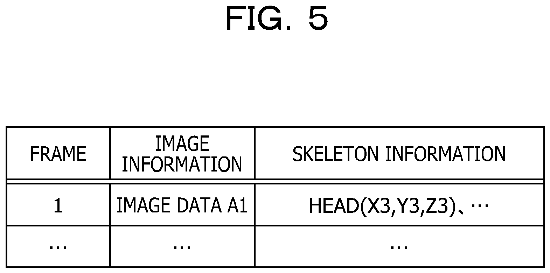

The skeleton data 15 is data including information regarding a skeleton generated using each distance image. Specifically, the skeleton data 15 includes a position of each joint defined by the skeleton definition 14 acquired using the distance image. FIG. 5 is a diagram for explaining the skeleton data 15. As illustrated in FIG. 5, the skeleton data 15 is information in which "a frame, image information, and skeleton information" are associated.

Here, the "frame" is an identifier used to identify each frame imaged by the 3D laser sensor 5, and the "image information" is data of a distance image of which a position of a joint or the like is known. The "skeleton information" is three-dimensional positional information of a skeleton, and represents the joint positions (three-dimensional coordinates) corresponding to the 18 joints illustrated in FIG. 4. The example of FIG. 5 illustrates that the positions of the 18 joints including the coordinates "X3, Y3, Z3" of HEAD or the like are known in "image data A1" that is a distance image. Note that the joint position can be extracted using a learning model, for example, that is a learning model learned in advance and that is a learning model that extracts each joint position from the distance image or the like.

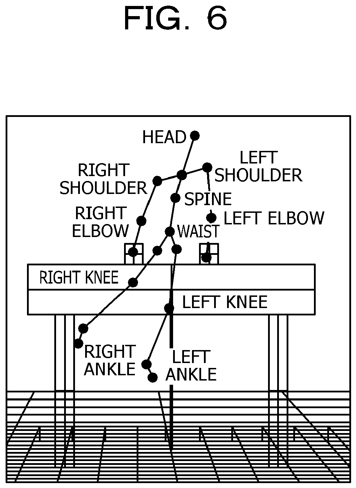

Here, in a performance of the pommel horse targeted in the present embodiment, the 18 joints can be used. However, only joints particularly related the performance of the pommel horse can be used. FIG. 6 is a diagram for explaining skeleton information related to the pommel horse. As illustrated in FIG. 6, as the skeleton information (joint) largely related to the performance of the pommel horse, the head, the right shoulder, the left shoulder, the spine, the right elbow, the left elbow, the waist, the right knee, the left knee, the right ankle, and the left ankle are exemplified.

The head indicates a motion for raising or lowering the head. The shoulder indicates a positional relationship between a body trunk and an arm. The spine indicates bending of the body and indicates piked and layout of the gymnastics. The elbow indicates a bending way of the arm and how a force is applied. The wrist indicates a position where an object is grabbed or the like. The waist indicates the approximate center of gravity of the body. The knee indicates a relationship between the body trunk and a leg and can specify a difference between straddle and legs together. The ankle indicates trajectories of a walking state, a running state, and a pommel horse rotation motion.

In the competition of the pommel horse, a performance performed in a state where the pommel is grabbed by the hand and a performance performed in a state where the hand is placed on the leather are mixedly included, and even if the same motions are made, the technique or the difficulty changes depending on the position of the hand. On the other hand, because the pommels exist on the leather, it is difficult to automatically determine whether the hand is positioned on the pommel or the leather in the series of performances according to only the positions of the hands. Therefore, in the first embodiment, by estimating the position of the hand particularly considering a raising width of the ankle or the like from the motion of the entire joints illustrated in FIG. 6, the estimation accuracy of the joint position is improved.

The class classification model 16 is a learning model that estimates the position of the wrist of the performer 1 on the basis of the time-series skeleton information and is a model that uses a neural network learned by a learning unit 23 to be described later or the like. For example, the class classification model 16 classifies the position on the pommel horse into a plurality of classes and learns a time-series change in the skeleton information of the performer as a feature amount so as to estimate the wrist support positions of the performer 1.

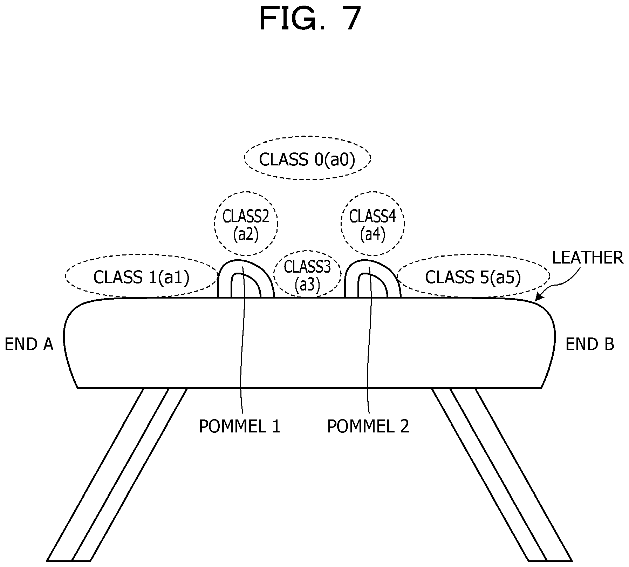

FIG. 7 is a diagram for explaining class classification. As illustrated in FIG. 7, in the first embodiment, for example, an example will be described in which a region is divided into 6 classes including a class 0 to a class 5. Specifically, the class 1 (a1) is a leather region between an end A and the pommel 1, and the class 2 (a2) is a region on the pommel 1. The class 3 (a3) is a region of the leather between the pommels 1 and 2, and the class 4 (a4) is a region on the pommel 2. The class 5 is a region of the leather between the pommel 2 and an end B, and the class 0 (a0) is a region other than the class 1 to the class 5.

The control unit 20 is a processing unit that controls the entire learning device 10, and is, for example, a processor or the like. The control unit 20 includes an acquisition unit 21, a learning data generation unit 22, and the learning unit 23 and learns the class classification model 16. Note that the acquisition unit 21, the learning data generation unit 22, and the learning unit 23 are examples of an electronic circuit such as a processor or examples of a process included in the processor or the like.

The acquisition unit 21 is a processing unit that acquires various types of data. For example, the acquisition unit 21 acquires the distance image from the 3D laser sensor 5 and stores the distance image in the storage unit 12. Furthermore, the acquisition unit 21 acquires the skeleton data from the administrator's terminal or the like and stores the skeleton data in the storage unit 12.

The learning data generation unit 22 is a processing unit that generates learning data used to learn the class classification model 16. Specifically, the learning data generation unit 22 generates learning data including the time-series skeleton information as an explanatory variable and the wrist support position (class) as an objective variable, stores the learning data in the storage unit 12, and outputs the learning data to the learning unit 23.

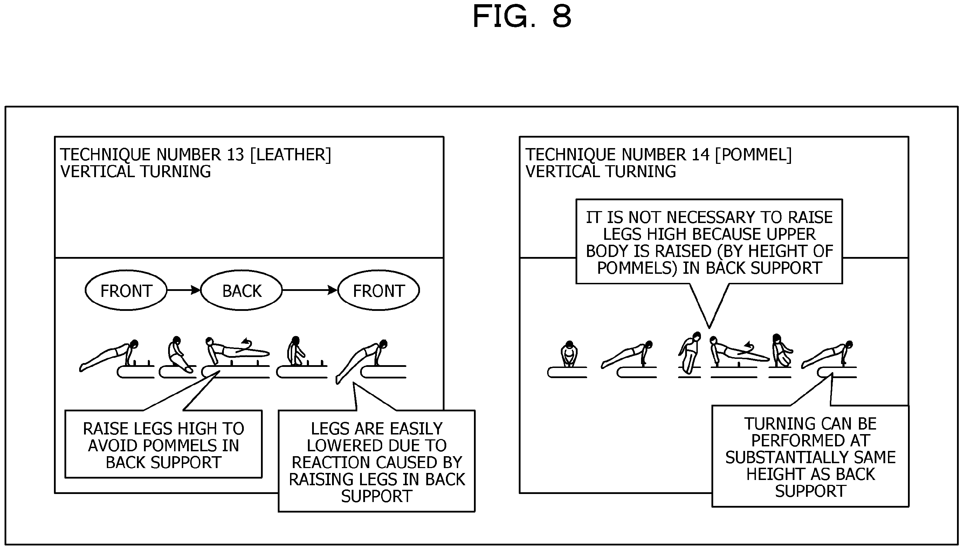

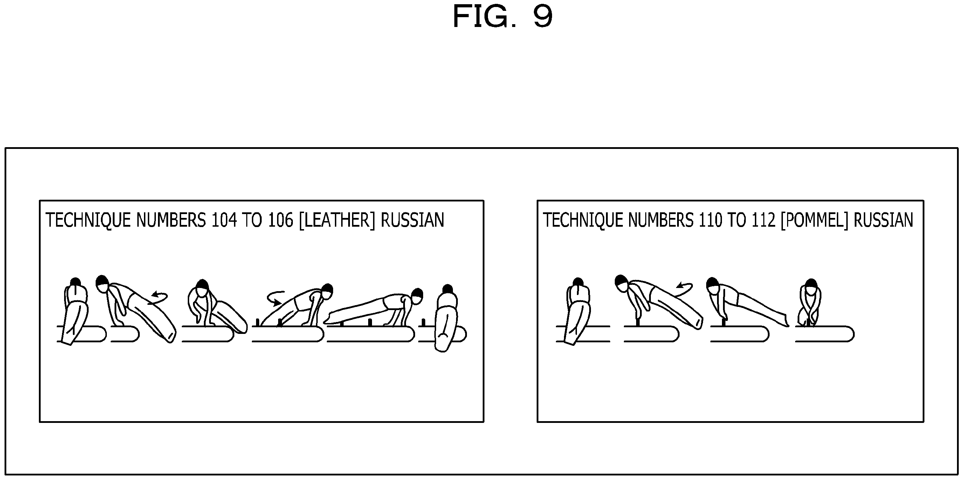

Here, as a reason for learning the time-series skeleton information as a feature amount, a difference in a joint movement depending on a support position will be described. FIG. 8 is a diagram for explaining a difference in a joint movement depending on a support position at the time of lateral turning, and FIG. 9 is a diagram for explaining a difference in a joint movement depending on a support position at the time when Russian is performed.

As illustrated in FIG. 8, vertical turning is a motion for turning in an order of front support, back support, and front support. As indicated by a technique number 13, in the vertical turning in which the wrist support positions are on the leather position, the legs are raised high in order to avoid the pommels at the time of back support, and at the time of front support thereafter, the legs are easily lowered due to the reaction caused by raising the legs at the time of back support. On the other hand, as indicated by a technique number 14, in the vertical turning in which the wrist support positions are on the pommel, it is not necessary to raise the legs high because the upper body is raised by the height of the pommel in the back support, the turning can be performed at substantially the same height as the back support, in the front support thereafter. In other words, a change amount of the z value of the ankle changes depending on the wrist support positions.

Furthermore, as illustrated in FIG. 9, Russian is a motion in which the direction changes according to the turn in downward support. As indicated by technique numbers 104 and 106, in Russian in which the wrist support positions are on the leather position, turning is performed around the hands placed on the leather as an axis, and accordingly, the positions of the feet are lower than the leather. As indicated by technique numbers 110 to 112, in Russian in which the wrist support positions are on the pommel, turning is performed around hand placed on the pommel as an axis, and accordingly, the position of the foot is higher than that in Russian in which the wrist support positions are on the leather position. In other words, a change amount of the z value of the ankle changes depending on the wrist support positions.

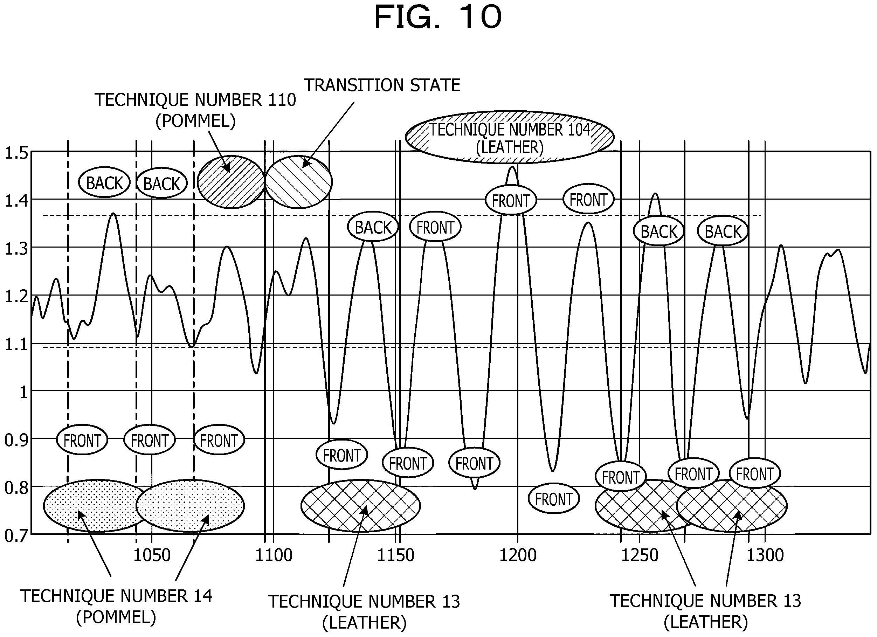

Next, a change in the z value of the ankle will be specifically described. FIG. 10 is a diagram for explaining the change in the z value of the ankle depending on the support position. In FIG. 10, the z value of the ankle when vertical turning with the pommel (technique number 14), Russian with the pommel (technique number 110), vertical turning with the leather (technique number 13), and Russian with the leather (technique number 104) are performed in order is illustrated. As illustrated in FIG. 10, the change (amplitude) in the z value of the ankle in a case where the support position is on the pommel is small, and the change in the z value of the ankle in a case where the support position is on the leather is large. That is, it can be considered that the estimation accuracy of the support position is improved by learning the change in the z value.

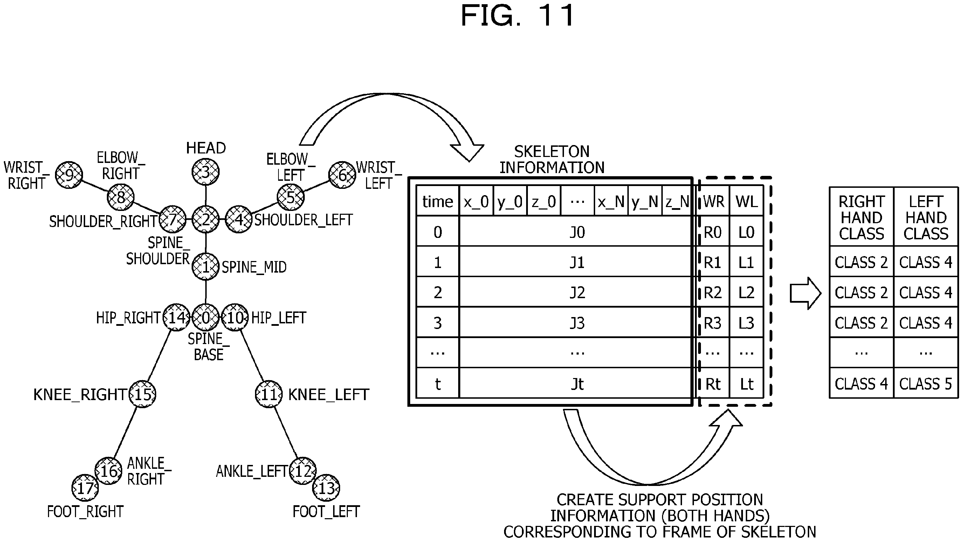

From this, the learning data generation unit 22 generates learning data including the time-series skeleton information as an explanatory variable and the wrist support position (class) as an objective variable. FIG. 11 is a diagram for explaining generation of the learning data. As illustrated in FIG. 11, the learning data generation unit 22 refers to the skeleton information of the skeleton data 15, and adds "WR" indicating the coordinates of the right hand support position and "WL" indicating the coordinates of the left hand support position to the skeleton information of each frame as both-hand support position information.

For example, the learning data generation unit 22 acquires a coordinate value (R0) of the right wrist (joint position = 9) and a coordinate value (L0) of the left wrist (joint position = 6) from the skeleton information for skeleton information (J0) of a frame of time = 0. Thereafter, the learning data generation unit 22 compares the coordinate value (R0) of the right wrist and the coordinate value (L0) of the left wrist and a coordinate value belonging to each class of the pommel horse that has been preset, and sets a right hand class (class 2) and a left hand class (class 4).

Similarly, the learning data generation unit 22 acquires a coordinate value (R1) of the right wrist and a coordinate value (L1) of the left wrist from the skeleton information for skeleton information (J1) of a frame of time = 1. Thereafter, the learning data generation unit 22 compares the coordinate value (R1) of the right wrist and the coordinate value (L1) of the left wrist and a coordinate value belonging to each class, and sets the right hand class (class 2) and the left hand class (class 4).

In this way, the learning data generation unit 22 adds the right hand class and the left hand class that are correct answer information to the skeleton information of each frame acquired in time series. Note that, in FIG. 11, for simple description, the skeleton information is described as J0 or the like. However, in reality, the coordinates of x, y, and z values for each 18 joints (18 × 3 = 54 in total) are set.

The learning unit 23 is a processing unit that learns the class classification model 16 using the learning data generated by the learning data generation unit 22. Specifically, the learning unit 23 optimizes a parameter of the class classification model 16 through supervised learning using the learning data, stores the learned class classification model 16 in the storage unit 12, and transmits the class classification model 16 to the recognition device 50. Note that a timing to end the learning can be freely set, such as a point of time when learning using a predetermined number or more of pieces of learning data is completed or a point of time when a restoration error falls under a threshold value.

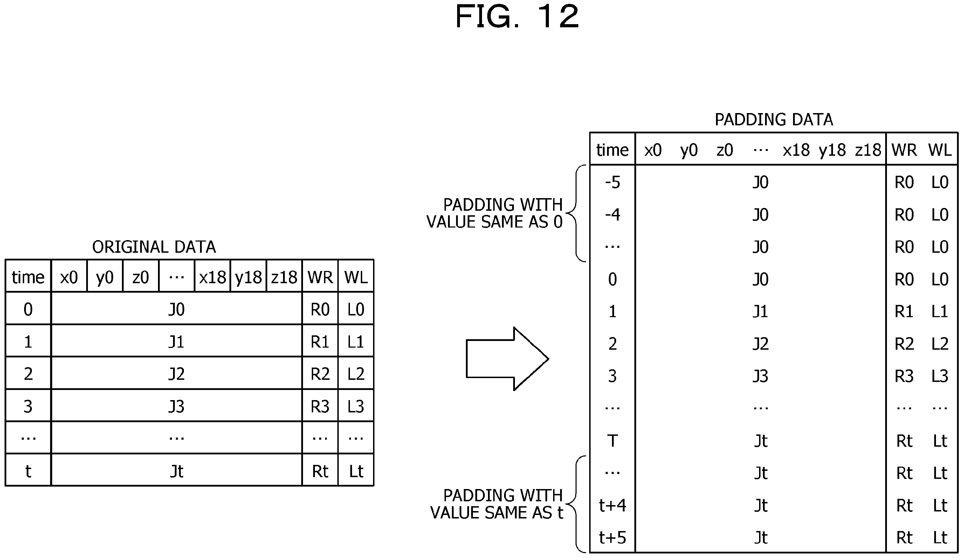

Because such a learning unit 23 inputs, for example, 30 frames as a single piece of input data into the class classification model 16 as the time-series skeleton information, the learning unit 23 shapes the learning data through padding or the like. FIG. 12 is a diagram for explaining shaping of the learning data. As illustrated in FIG. 12, in a case where a predetermined number of pieces of learning data is acquired from original data, in which t pieces of skeleton information from a frame 0 of time = 0 to a frame t of time = t exist, as shifting the data one by one, in order to match the number of pieces of each learning data, data of a head frame is copied and data of a final frame is copied so as to increase the number of pieces of learning data.

For example, the learning unit 23 copies data of the frame 0 "skeleton information (J0)", the support position information "WR (R0), WL (L0)" to a frame previous to the frame 0 and generates a frame (- 1), a frame (- 2), or the like. Similarly, the learning unit 23 copies data of the frame t "skeleton information (Jt)", support position information "WR (Rt), WL (Lt)" to a frame after the frame t and generates a frame (t + 1), a frame (t + 2), or the like. Note that the number of paddings is set to a half of the number of frames (length) used for learning or the like.

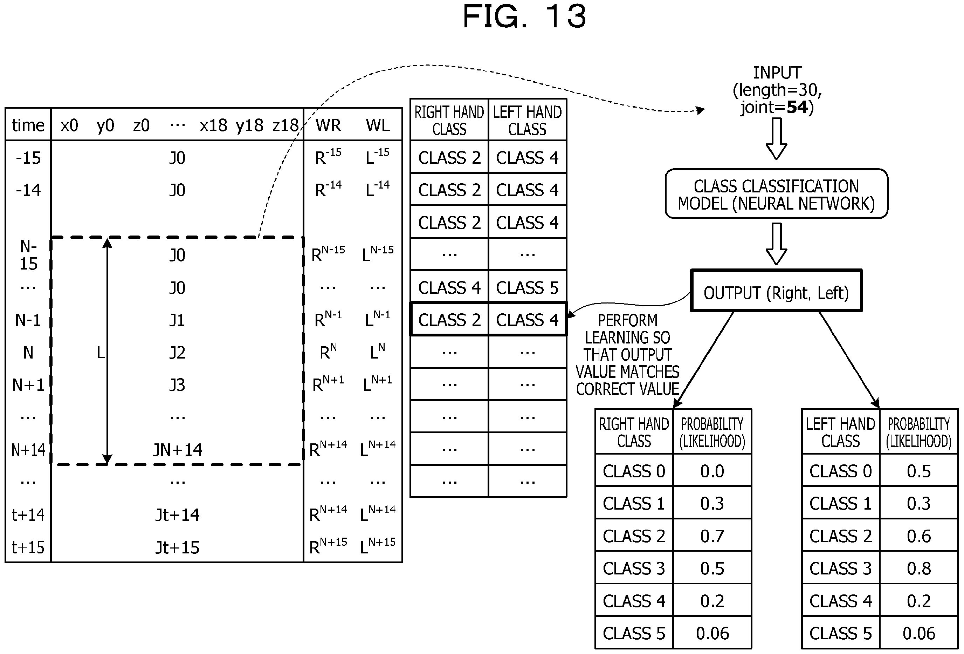

In this way, the learning unit 23 learns the class classification model 16 after shaping the learning data. FIG. 13 is a diagram for explaining learning of the class classification model 16. As illustrated in FIG. 13, the learning unit 23 acquires learning data of L pieces of time-series skeleton information as an explanatory variable and acquires learning data "right hand class and left hand class" positioned in the middle as an objective variable. Then, the learning unit 23 inputs the L pieces of learning data into the class classification model 16 and learns the class classification model 16 so that the output result matches the objective variable according to an error back propagation method based on an error between the output result of the class classification model 16 and the objective variable "right hand class and left hand class" or the like.

For example, the learning unit 23 acquires skeleton information of 30 frames from a frame (N - 15) to a frame (N - 14) having a frame N in the middle as an explanatory variable and acquires "right hand class (class 2) and left hand class (class 4)" of the frame N as an objective variable. Then, the learning unit 23 inputs the acquired 30 frames into the class classification model 16 as one input data and acquires a probability (likelihood) that the right hand class falls under each class and a probability (likelihood) that the left hand class falls under each class as the output results of the class classification model 16.

Thereafter, the learning unit 23 learns the class classification model 16 so that the class 2 that is the objective variable has the highest probability among the probabilities of the right hand class and the class 4 that is the objective variable has the highest probability among the probabilities of the left hand class.

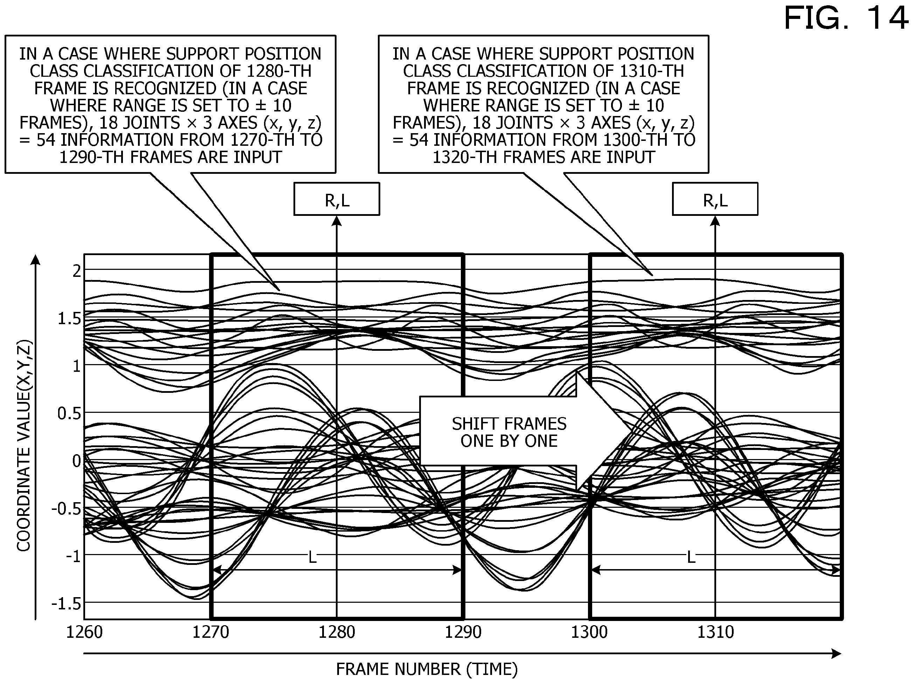

In this way, the learning unit 23 learns a change in the skeleton information as one feature amount by performing learning using the learning data in which the learning data is shifted frame by frame. FIG. 14 is a diagram for explaining an example of the feature amount to be learned. In FIG. 14, the horizontal axis indicates a frame number (time), and the vertical axis indicates coordinate values (x axis, y axis, and z axis) and a time-series change in coordinate values of 18 joints. For example, in a case where a range is set to ± 10 frames and class classification of a 1280-th frame is recognized, skeleton information of "20 × (18 joints × 3 axes (x, y, z) = 54) = 1080" between a 1270-th frame and a 1290-th frame is input, and the class classification model 16 is learned. Furthermore, in a case where class classification of a 1310-th frame is recognized, skeleton information of "20 × (18 joints × 3 axes (x, y, z) = 54) = 1080" between a 1300-th frame and a 1320-th frame is input, and the class classification model 16 is learned.

### (Configuration of Recognition Device 50)

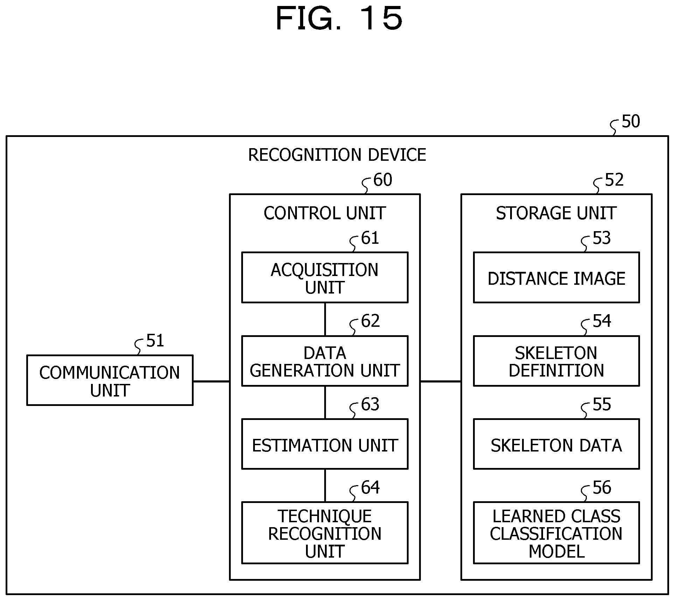

FIG. 15 is a functional block diagram illustrating a functional configuration of the recognition device 50 according to the first embodiment. As illustrated in FIG. 15, the recognition device 50 includes a communication unit 51, a storage unit 52, and a control unit 60.

The communication unit 51 is a processing unit that controls communication with another device and is, for example, a communication interface or the like. For example, the communication unit 51 receives the distance image of the performer 1 captured by the 3D laser sensor 5, receives the learned class classification model from the learning device 10, and transmits various recognition results to the scoring device.

The storage unit 52 is a storage device that stores data, programs to be executed by the control unit 60, or the like, which is, for example, a memory, a processor, or the like. The storage unit 52 stores a distance image 53, a skeleton definition 54, skeleton data 55, and a learned class classification model 56.

The distance image 53 is a distance image of the performer 1 captured by the 3D laser sensor 5 and is, for example, a distance image obtained by imaging a performance of a performer to be scored. The skeleton definition 54 is definition information used to specify each joint on the skeleton model. Note that, because the skeleton definition 54 is similar to that in FIG. 4, detailed description will be omitted.

The skeleton data 55 is data including information regarding a skeleton generated for each frame by a data generation unit 62 to be described later. Specifically, as in FIG. 5, the skeleton data 55 is information in which "a frame, image information, and skeleton information" are associated.

The learned class classification model 56 is a class classification model learned by the learning device 10. This learned class classification model 56 is a learning model that estimates a wrist position of the performer 1 on the basis of the time-series skeleton information.

The control unit 60 is a processing unit that controls the entire recognition device 50 and is, for example, a processor or the like. The control unit 60 includes an acquisition unit 61, the data generation unit 62, an estimation unit 63, and a technique recognition unit 64 and estimates a wrist position or recognizes a technique performed by the performer 1. Note that the acquisition unit 61, the data generation unit 62, the estimation unit 63, and the technique recognition unit 64 are examples of an electronic circuit such as a processor or examples of a process included in the processor or the like.

The acquisition unit 61 is a processing unit that acquires various types of data and various instructions. For example, the acquisition unit 61 acquires a distance image based on a measurement result (three-dimensional point group data) by the 3D laser sensor 5 and stores the distance image in the storage unit 52. Furthermore, the acquisition unit 61 acquires the learned class classification model 56 from the learning device 10 or the like and stores the learned class classification model 56 in the storage unit 52.

The data generation unit 62 is a processing unit that generates skeleton information including positions of 18 joints from each distance image. For example, the data generation unit 62 generates skeleton information that specifies the 18 joint positions using a learned model for recognizing the skeleton information from the distance image. Then, the data generation unit 62 stores the skeleton data 55, in which a frame number corresponding to the distance image, the distance image, and the skeleton information are associated, in the storage unit 52. Furthermore, the skeleton information of the skeleton data 15 can be generated according to the similar method by the learning device 10.

The estimation unit 63 is a processing unit that estimates wrist support positions of the performer 1 using the time-series skeleton information of the performer 1 and the learned class classification model 56. Specifically, the estimation unit 63 inputs the frames as many as those at the time of learning into the learned class classification model 56 as a single piece of input data, estimates the wrist support positions of the performer 1 on the basis of an output result of the learned class classification model 56, and outputs an estimation result to the technique recognition unit 64 and the scoring device 90.

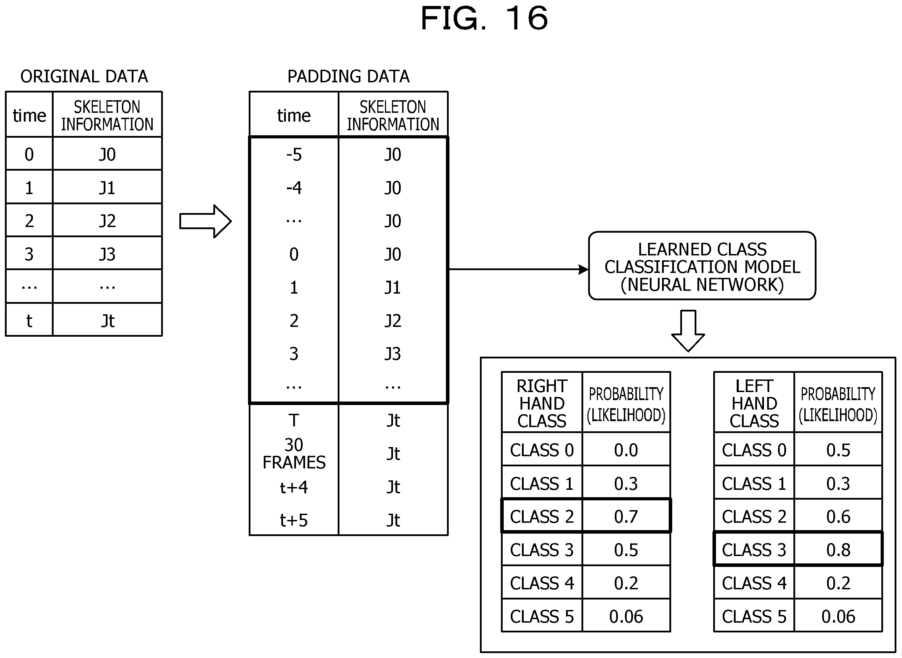

FIG. 16 is a diagram for explaining class classification processing. As illustrated in FIG. 16, the estimation unit 63 performs data padding according to a method similar to that in FIG. 12 using the skeleton information generated by the data generation unit 62 as original data and generates padding data. Then, the estimation unit 63 acquires 30 frames from the beginning and inputs the frames into the learned class classification model 56.

Thereafter, the estimation unit 63 acquires the "class 2" having the highest probability among probabilities of the right hand class and the "class 3" having the highest probability among probabilities of the left hand class from the output result of the learned class classification model 56. Then, the estimation unit 63 estimates "right hand = class 2 and left hand = class 3" as the wrist support positions of the performer 1. In this way, by inputting the frames as shifting the frames one by one, the estimation unit 63 estimates the wrist support positions in each state during the performance.

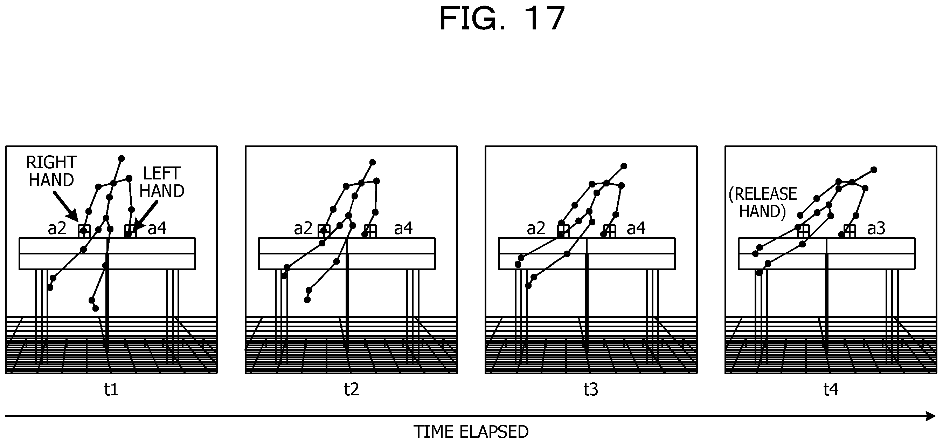

FIG. 17 is a diagram for explaining class classification results in time series. In FIG. 17, estimation results of support positions of both wrists by the estimation unit 62 are illustrated. As illustrated in FIG. 17, joint (wrist) positions to be identified are recognized by using time-series information of a plurality of joint positions so as to improve accuracy. Even if a wrist position is deviated from the class 4 (a4) to a position determined as the class 3 (a3) due to noise at a timing of time t4, the position can be classified to be recognized as the class 4 (a4) according to continuous motions of the shoulders and the waist.

Returning to FIG. 15, the technique recognition unit 64 is a processing unit that automatically recognizes each technique performed by the performer 1 using the estimation result of the estimation unit 62 and the skeleton data 55 generated by the data generation unit 62. For example, the technique recognition unit 64 automatically recognizes each technique performed by the performer 1 by detecting a position of the body of the performer 1 and a posture between techniques, specifying front support or a landing position, determining a segment point, determining a basic motion using information between the segment points, or the like using the method disclosed in International Publication Pamphlet No. WO 2018/070414, and transmits the recognized techniques to the scoring device 90.

For example, the technique recognition unit 64 calculates vector data indicating a direction between the joints using the skeleton information of each frame and calculates a feature amount for specifying a direction and a motion of the body. Then, the technique recognition unit 64 compares the calculated feature amount with a technique recognition rule that has been determined in advance and recognizes the technique. For example, the technique recognition unit 64 calculates feature amounts A and B on the basis of the skeleton information between the segments and recognizes a technique A according to a combination of the feature amounts A and B.

Furthermore, the technique recognition unit 64 specifies a place where the support position is changed as a segment point using the wrist support position estimation result by the estimation unit 62 and specifies where the techniques are separated. Note that the technique recognition unit 64 can recognize the technique using a learning model that uses the time-series skeleton information as an input and outputs a technique name or the like.

### (Configuration of Scoring Device 90)

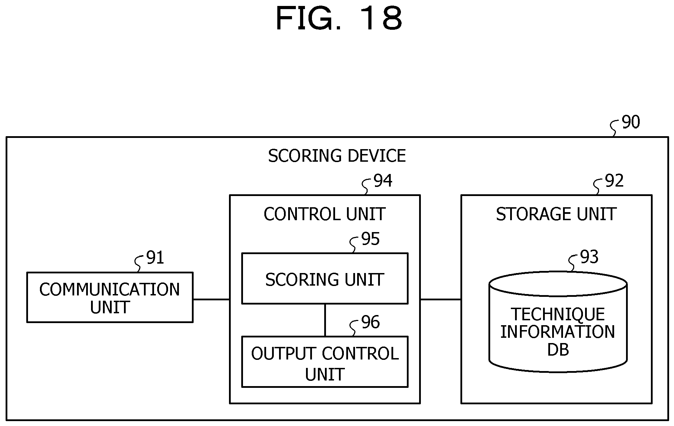

FIG. 18 is a functional block diagram illustrating a functional configuration of the scoring device 90 according to the first embodiment. As illustrated in FIG. 18, the scoring device 90 includes a communication unit 91, a storage unit 92, and a control unit 94. The communication unit 91 receives the technique recognition result, the wrist support position estimation result, the skeleton information of the performer (three-dimensional skeleton positional information), or the like from the recognition device 50.

The storage unit 92 is an example of a storage device that stores data, programs to be executed by the control unit 94, or the like, which is, for example, a memory, a hard disk, or the like. This storage unit 92 stores technique information 93. The technique information 93 is information in which a technique name, a difficulty, a score, a position of each joint, an angle of each joint, a scoring rule, or the like are associated. Furthermore, the technique information 93 includes various types of other information used for scoring.

The control unit 94 is a processing unit that controls the entire scoring device 90 and, for example, is a processor or the like. The control unit 94 includes a scoring unit 95 and an output control unit 96 and performs scoring of a performer according to information input from the recognition device 50 or the like.

The scoring unit 95 is a processing unit that scores a technique of the performer or scores a performance of the performer. Specifically, the scoring unit 95 compares the technique recognition result, the wrist support position estimation result, the skeleton information of the performer, or the like transmitted from the recognition device 50 as needed with the technique information 93 and scores the technique or the performance performed by the performer 1. For example, the scoring unit 95 calculates a D score or an E score. Then, the scoring unit 95 outputs a scoring result to the output control unit 96. Note that the scoring unit 95 can perform scoring using widely used scoring rules.

The output control unit 96 is a processing unit that displays, for example, the scoring result of the scoring unit 95 on a display or the like. For example, the output control unit 96 acquires various types of information such as the distance image captured by each 3D laser sensor, the three-dimensional skeleton information, each piece of image data during the performance of the performer 1, or the scoring result from the recognition device 50 to display the acquired various types of information on a predetermined screen.

### [Learning Processing]

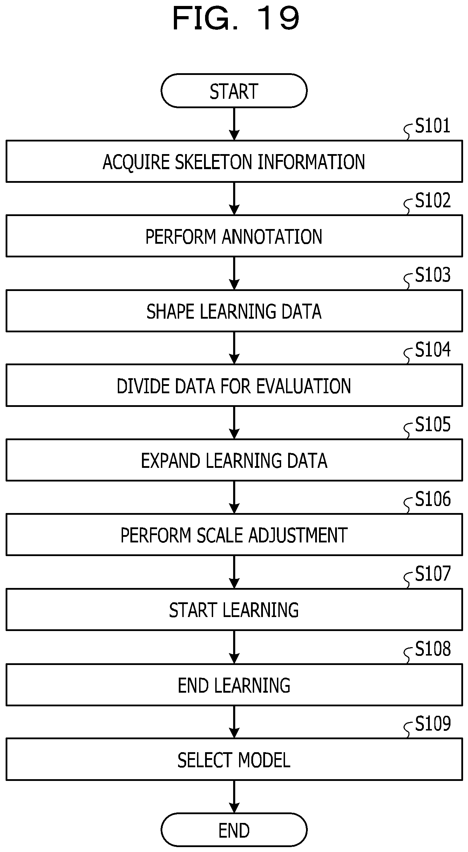

FIG. 19 is a flowchart illustrating a flow of learning processing. As illustrated in FIG. 19, the learning data generation unit 22 of the learning device 10 acquires each piece of the skeleton information included in each piece of the skeleton data 15 (S101) and performs annotation for generating correct answer information of support positions of both wrists (S102).

Subsequently, the learning data generation unit 22 shapes the learning data such as dividing the learning data into a frame having a certain section or performing padding (S103). Then, the learning data generation unit 22 divides the learning data into data for learning (training data) used for training and data for evaluation used for evaluation (S104).

Thereafter, the learning data generation unit 22 performs learning data expansion including a rotation and a reverse for each coordinate axis of a pommel horse instrument, addition of random noise, adjustment of distribution of correct values of the support position, or the like (S105). Subsequently, the learning data generation unit 22 performs scale adjustment including normalization, standardization, or the like (S106).

Then, the learning unit 23 determines an algorithm, a network, a hyperparameter, or the like of the class classification model 16 and learns the class classification model 16 using the learning data (S107). At this time, the learning unit 23 evaluates learning accuracy (evaluation error) of the class classification model 16 during learning using the data for evaluation for each epoch.

Thereafter, when a predetermined condition is satisfied, for example, when the number of times of learning exceeds a threshold value or the evaluation error becomes equal to or less than a certain value, the learning unit 23 ends learning (S108). Then, the learning unit 23 selects the class classification model 16 at the time when the evaluation error is minimized (S109).

### [Automatic Scoring Processing]

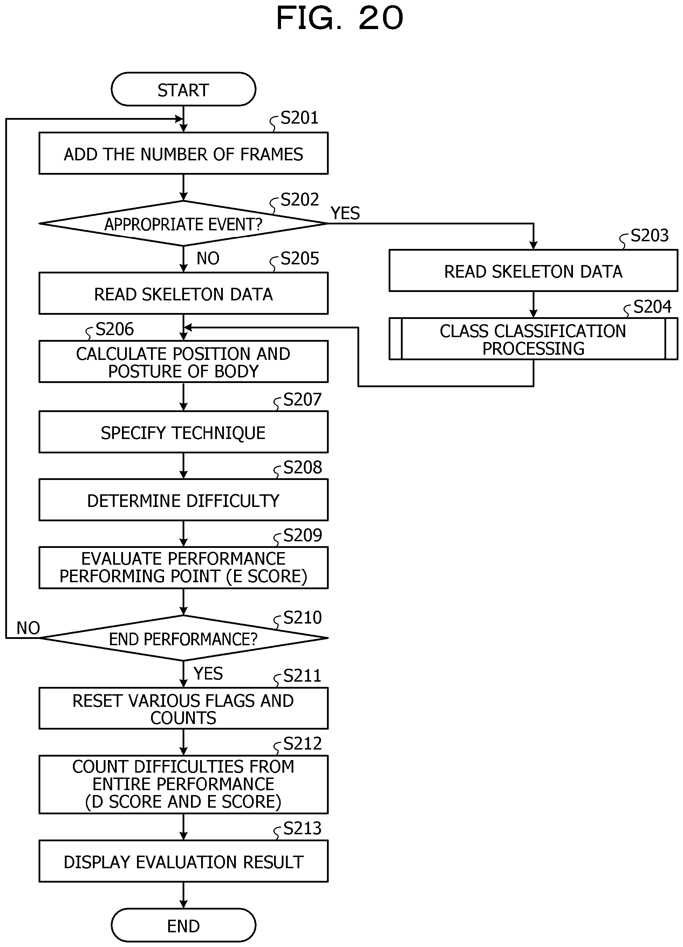

FIG. 20 is a flowchart illustrating a flow of automatic scoring processing. As illustrated in FIG. 20, the recognition device 50 updates the number of frames to be processed according to a value obtained by adding one to a frame number (S201).

Subsequently, the recognition device 50 refers to preset information and determines whether or not an event that is performed falls under processing of class classification (S202). Here, in a case of the event that falls under the class classification such as the pommel horse or the parallel bars (S202: Yes), the recognition device 50 reads the skeleton data 55 (S203) and executes the class classification processing (S204). On the other hand, in a case of the event that does not fall under the class classification such as the still rings or the vault (S202: No), the recognition device 50 reads the skeleton data 55 (S205).

Thereafter, the recognition device 50 detects the position and the posture of the body of the performer using the class classification result, the skeleton information in the skeleton data 55, or the like (S206), executes setting of a front support flag and a landing flag, determination of a segment point, determination of a basic motion, or the like, and specifies a technique performed by the performer 1 (S207).

Then, the scoring device 90 determines a difficulty using the specified technique or the like (S208) and evaluates a performance performing point and calculates an E score (S209). Thereafter, while the performance is continued (S210: No), S201 and subsequent processing are repeated.

On the other hand, when the performance ends (S210: Yes), the scoring device 90 resets various flags and counts used for scoring (S211) and counts the technique difficulties from the entire performance and calculates the D score and the E score (S212). Thereafter, the scoring device 90 stores the evaluation results or the like in the storage unit 92 and displays the evaluation results or the like on a display device such as a display (S213).

### (Class Classification Processing)

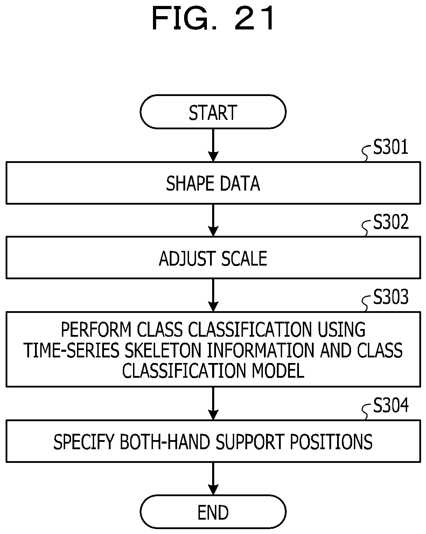

FIG. 21 is a flowchart illustrating a flow of the class classification processing. Note that this processing is executed in S204 in FIG. 20.

As illustrated in FIG. 21, as at the time of learning, the data generation unit 62 of the recognition device 50 shapes data to be classified such as dividing the data into a frame having a certain section or performing padding (S301). Subsequently, the data generation unit 62 performs scale adjustment such as normalization or standardization (S302).

Then, the estimation unit 63 of the recognition device 50 performs class classification on time-series skeleton information using the learned class classification model 56 (S303). Thereafter, the estimation unit 63 specifies support positions of both hands (both wrists) on the basis of the classification result (S304).

### [Effects]

As described above, the recognition device 50 can determine the support position using a class classifier using not only the positional information of the joint to be identified such as the wrists at the time of performing the pommel horse but also time-series information of the joint position regarding the person's motion such as the head, the shoulders, the spine, the elbows, the waist, the knees, and the ankles as an input.

Furthermore, in the pommel horse in the gymnastics competition, a technique to be recognized differs depending on a support region even if the same motion is made, and as a result, there is a case where the difficulty changes. However, in a case where the support region is erroneously determined due to noise in sensor data, the recognition device 50 according to the first embodiment identifies support positions including not only a portion related to the support but also a motion of a portion reflecting the feature of the motion so as to achieve more robust technique recognition.

Therefore, the automatic scoring system can recognize the performance using the skeleton information and the accurate support position of the performer 1, and the recognition accuracy can be improved. Furthermore, a correct automatic scoring result can be provided to a referee by improving the recognition accuracy, and fairness and accuracy of scoring can be guaranteed.

### [Second Embodiment]

Incidentally, while the embodiment of the present invention has been described above, the present invention may be carried out in a variety of different modes in addition to the embodiment described above.

### [Application Example]

In the above embodiment, the gymnastics competition has been described as an example, but the embodiments are not limited to the example and may be applied to other competitions in which athletes perform a series of techniques and referees score the techniques. Examples of the other competitions include figure skating, rhythmic gymnastics, cheerleading, swimming diving, karate kata, and mogul air, or the like. Furthermore, in the embodiment described above, an example has been described in which the support positions of both wrists are estimated. However, the present invention is not limited to this and can be applied to estimation of a joint position of any one of 18 joints, a position between joints, or the like.

### [3D Laser Sensor]

The 3D laser sensor 5 is an example of an imaging device, and a video camera or the like may also be used. In a case where the video camera is used, the distance images 13 and 53 are RGB images. As a method for obtaining skeleton information from the RGB image, a known technique such as OpenPose can be used.

### [Skeleton Information]

Furthermore, in the embodiment described above, an example has been described in which learning or recognition using the position of each of the 18 joints is performed. However, the present invention is not limited to this, and learning or the like can be performed as designating one or more joints. Furthermore, in the embodiment described above, the position of each joint has been indicated and described as an example of the skeleton information. However, the skeleton information is not limited to this, and a direction (vector) between the joints, an angle of each joint, the directions of the limbs, the direction of the face, or the like can be adopted.

### [Numerical Values, etc.]

The numerical values and the like used in the above embodiment are merely examples, do not limit the embodiments, and may be optionally set and changed. Furthermore, the number of frames, the number of classes, or the like are examples, and can be arbitrarily set and changed. Furthermore, not only the neural network but also various machine learning and deep learning can be used for the model.

### [Class Classification]

In the embodiment described above, an example has been described in which a support position of a specific joint is estimated using the class classification model to which machine learning such as the neural network is applied. However, the present invention is not limited to this. For example, the positions of both wrists can be estimated using a rule in which the positions of both wrists to be estimated are associated with the remaining 16 joint positions. That is, the positions of both wrists can be estimated using not only the skeleton information corresponding to the positions of both wrists to be estimated but also the positional information of all the joints of the person.

### [The Number of Frames]

In the embodiment described above, the class classification model is learned and the estimation using the class classification model is performed using the number of frames, such as 30, that has been set in advance as the number of time-series frames. However, the present invention is not limited to this. For example, the class classification model can be learned and the estimation using the class classification model can be performed using the number of frames in units of a predetermined movement such as a performance or a technique.

### [System]

Pieces of information including a processing procedure, a control procedure, a specific name, various types of data, and parameters described above or illustrated in the drawings may be optionally changed unless otherwise specified.

In addition, each component of each device illustrated in the drawings is functionally conceptual and does not necessarily have to be physically configured as illustrated in the drawings. In other words, specific forms of distribution and integration of each device are not limited to those illustrated in the drawings. That is, all or a part of the devices may be configured by being functionally or physically distributed or integrated in optional units depending on various types of loads, usage situations, or the like. Furthermore, each 3D laser sensor may also be built in each device or may also be connected through communication or the like as an external device of each device.

For example, the technique recognition and the combination evaluation can be respectively achieved by different devices. Furthermore, the learning device 10, the recognition device 50, and the scoring device 90 can be achieved by any combination of devices. Note that the acquisition unit 61 is an example of an acquisition unit, the estimation unit 63 is an example of an estimation unit, and the technique recognition unit 64 is an example of a recognition unit.

Moreover, all or any part of individual processing functions performed in each device may be implemented by a central processing unit (CPU) and a program analyzed and executed by the CPU or may be implemented as hardware by wired logic.

### [Hardware]

Next, a hardware configuration of a computer such as the learning device 10, the recognition device 50, or the scoring device 90 will be described. Note that, because each device has a similar configuration, here, a computer 100 will be described, and the recognition device 50 will be exemplified as a specific example.

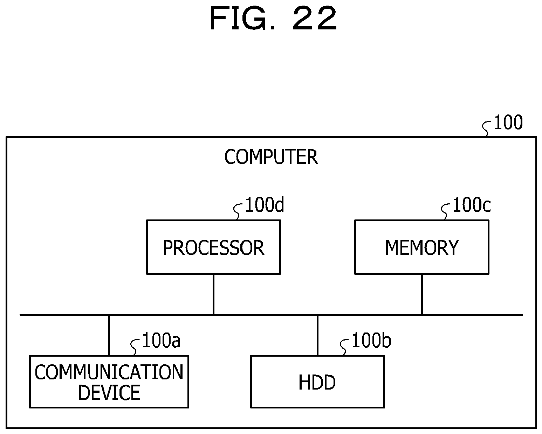

FIG. 22 is a diagram for explaining a hardware configuration example. As illustrated in FIG. 22, the computer 100 includes a communication device 100a, a hard disk drive (HDD) 100b, a memory 100c, and a processor 100d. Furthermore, the respective parts illustrated in FIG. 22 are mutually connected by a bus or the like. Note that, as the HDD, a storage device such as a solid state drive (SSD) may also be used.

The communication device 100a is a network interface card or the like and communicates with another server. The HDD 100b stores a program that activates the functions illustrated in FIG. 15 or the like, and a DB.

The processor 100d reads a program that executes processing similar to the processing of each processing unit illustrated in FIG. 15 from the HDD 100b or the like and loads the read program into the memory 100c, thereby operating a process that executes each function described with reference to FIG. 15 or the like. In other words, this process executes a function similar to the function of each processing unit included in the recognition device 50. Specifically, when the recognition device 50 is used as an example, the processor 100d reads a program having functions similar to the acquisition unit 61, the data generation unit 62, the estimation unit 63, the technique recognition unit 64, or the like from the HDD 100b or the like. Then, the processor 100d executes a process for executing processing similar to the acquisition unit 61, the data generation unit 62, the estimation unit 63, the technique recognition unit 64, or the like.

In this way, the computer 100 operates as an information processing device that performs a recognition method by reading and executing the program. Furthermore, the computer 100 may also implement functions similar to those of the embodiments described above by reading the program described above from a recording medium using a medium reading device and executing the read program described above. Note that this program mentioned in another embodiment is not limited to being executed by the computer 100. For example, the present invention may be similarly applied to a case where another computer or server executes the program, or a case where these computer and server cooperatively execute the program.

### REFERENCE SIGNS LIST

- 10: learning device
- 11: communication unit
- 12: storage unit
- 13: distance image
- 14: skeleton definition
- 15: skeleton data
- 16: class classification model
- 20: control unit
- 21: acquisition unit
- 22: learning data generation unit
- 23: learning unit
- 50: recognition device
- 51: communication unit
- 52: storage unit
- 53: distance image
- 54: skeleton definition
- 55: skeleton data
- 56: learned class classification model
- 60: control unit
- 61: acquisition unit
- 62: data generation unit
- 63: estimation unit
- 64: technique recognition unit

## Claims

1. A motion recognition method for causing a computer to execute processing comprising:
acquiring skeleton information based on positional information of each of a plurality of joints that includes a specific joint of a subject who makes a motion, in time series;
estimating a region where the specific joint is positioned among a plurality of regions obtained by dividing a region of an object used for the motion by using the positional information of the plurality of joints included in each piece of the time-series skeleton information;
recognizing the motion of the subject by using the time-series skeleton information and the estimated position of the specific joint; and
outputting a recognition result.

2. The motion recognition method according to claim 1, wherein
the estimating processing estimates the region where the specific joint is positioned by using a class classification model that outputs a likelihood to fall under each class that indicates the plurality of regions with respect to inputs of a plurality of pieces of skeleton information.

3. The motion recognition method according to claim 2, wherein
the estimating processing estimates the region where the specific joint is positioned by using the class classification model learned by using learning data that has time-series skeleton information as an explanatory variable and a class where the specific joint is positioned as an objective variable.

4. The motion recognition method according to claim 2, wherein
the estimating processing acquires the time-series skeleton information in units of a predetermined movement and estimates a class where the specific joint is positioned on the basis of an output result obtained by inputting each piece of the acquired skeleton information that falls under the predetermined movement unit into the class classification model.

5. The motion recognition method according to claim 1, wherein
the motion is a performance of gymnastics,
the subject is a performer of the gymnastics,
the object is an instrument used for the gymnastics, and
the recognizing processing recognizes a technique performed by the performer by using the time-series skeleton information and the estimated position of the specific joint.

6. A motion recognition program that causes a computer to execute a process, the process comprising:
acquiring skeleton information based on positional information of each of a plurality of joints that includes a specific joint of a subject who makes a motion, in time series;
estimating a region where the specific joint is positioned among a plurality of regions obtained by dividing a region of an object used for the motion by using the positional information of the plurality of joints included in each piece of the time-series skeleton information;
recognizing the motion of the subject by using the time-series skeleton information and the estimated position of the specific joint; and
outputting a recognition result.

7. An information processing device comprising:
an acquisition unit configured to acquire skeleton information based on positional information of each of a plurality of joints that includes a specific joint of a subject who makes a motion, in time series;
an estimation unit configured to estimate a region where the specific joint is positioned among a plurality of regions obtained by dividing a region of an object used for the motion by using the positional information of the plurality of joints included in each piece of the time-series skeleton information;
a recognition unit configured to recognize the motion of the subject by using the time-series skeleton information and the estimated position of the specific joint; and
an output unit configured to output a recognition result.
